# EUROPEAN PATENT APPLICATION

(11) **EP 3 108 751 A1**
(43) Date of publication of application: **28.12.2016**
(21) Application number: 16386009.1
(22) Date of filing: 17.06.2016
(51) Int. Cl.: A23C 9/00, A23C 19/00, A23C 23/00, A01J 25/00, A01K 67/02

(54) **SINGLE-BREED DAIRY AND CHEESE PRODUCTS OF GREEK INDIGENEOUS SHEEP AND GOAT BREEDS**

(30) Priority: 23.06.2015 GR 20150100287
(71) Applicant: Skoufos, Ioannis, 47100 Arta (GR); Tzora, Athina, 47100 Arta (GR); Anagnostopoulos, Athanasios, 11255 Athens (GR); Tsangaris, George, 15235 Vrilissia Attikis (GR)
(72) Inventor: Skoufos, Ioannis, 47100 Arta (GR); Tzora, Athina, 47100 Arta (GR); Anagnostopoulos, Athanasios, 11255 Athens (GR); Tsangaris, George, 15235 Vrilissia Attikis (GR)
(74) Representative: Risvas, Georgios

(57) **Abstract**

The present invention refers to the production of dairy and cheese products (e.g. yogurt, cheese etc.) through processing milk that originates from a single breed of goats or sheep, thus introducing the term "single-breed products" (SBP) or "designated breed of origin" (DBO) products. The exclusive characteristic of these products is that they definitely, and to the fullest extent, reflect/designate the special features of milk of the animal breed they originate from.

## Description

### B. FIELD OF THE INVENTION

The present invention refers to the production of dairy and cheese products (*e.g.* yogurt, cheese *etc.*) through processing milk that originates from a single breed of goats or sheep, thus introducing the term "single-breed products" (SBP) or "designated breed of origin" (DBO) products. The exclusive characteristic of these products is that they definitely, and to the fullest extent, reflect/designate the special features of milk of the animal breed they originate from.

### C. BACKGROUND OF THE INVENTION

Milk and milk products, are indispensible components of human nutrition for they are rich in proteins, trace-minerals and minerals that are of fundamental importance for proper growth and health of the human organism.

Milk used for the production of cheese and dairy products must always be of the highest quality and this is achieved, only if milk-producing animals are healthy and milk itself is thoroughly examined for both its chemical and microbiological composition.

Milk collected from mastitis-infected animals or animals under antibiotic treatment is not further processed for human consumption. For the production dairy and cheese products, milk undergoes pasteurization process, through heating, in order to remove all pathogens and microorganisms such as brucella. Phosphatase testing is the defining criterion for a successful disinfection process. In following steps, depending on the end-product, milk is processed (*e.g*. skimming) or fermented with microbe cultures, in order to obtain fermentation products (yogurt, sour milk) or cheese products (white cheese, cream cheese, hard cheese, fresh cheese etc.), using appropriate technologies for each specific type of product.

Milk used for the production of cheese and dairy products is mostly of cow, sheep and goat origin. Depending on the desired end-product each milk type can be processed alone or through mixing of several milk types, under certain ratios. For example with regard to yogurt production, cow or sheep milk is used, but for feta cheese production according to the European product specification either sheep milk alone, or mixture of sheep (up to 70%) and goat (up to 30%) milk can be used.

**Currently, there exist no dairy and/or cheese products that their production is based on the sole use of milk from a single breed of dairy animals.**

The present patent application, thus, refers to a novel category of dairy and cheese products [termed: single-breed products (SBP), or designated breed origin (DBO)] possessing the dominant characteristic that the raw material used, milk, originates from a single breed of milk-producing animal.

Under this notion, it is evident that single-breed dairy products designate to the fullest extent the specific milk characteristics of each animal breed that are otherwise suppressed/left unexploited, due to milk mixing and current production techniques.

### D. DESCRIPTION OF THE INVENTION

Single-breed dairy and cheese products (produced form milk of single goat or sheep breed) were unanalyzed by state-of-the-art, cutting-edge technologies; proteomics [the separation of protein by two-dimensional electrophoresis followed by protein identification by MALDI-TOF Mass Spectrometry (MS)] as well as nano-liquid chromatography-MS/MS analysis.

By application of the above technologies on milk and cheese of the indigenous Chios breed, 187 proteins were identified, while analysis resulted in 344 protein identifications for the Epirus mountain breed of Boutsko.

Analysis of Karagouniko breed milk/cheese resulted in identification of 226 proteins, and for milk/cheese of the indigenous goat breed of Capra prisca 217 proteins were identified

Comparative study of the results revealed that 187 proteins are exclusively expressed in milk/cheese of Chios breed, compared to the other indigenous sheep breeds. In the milk of Boutsko breed 344 proteins are exclusively expressed in comparison to other breeds, while 118 proteins are exclusively present in milk of the Karagouniko breed. Further, 163 proteins are exclusively expressed in milk of the indigenous goat breed of Capra prisca, compared to other breeds.

Milk used for the production of cheese and dairy products must always be of the highest quality and this is achieved, only if milk-producing animals are healthy and milk is thoroughly examined regarding both its chemical and microbiological composition. Optionally, in certain cases, microorganisms are used in order to provide special taste in the end-product, as well as in helping its maturation process.

For the production of single-breed dairy products, milk originating exclusively from a single breed of milk-producing animal (sheep or goat) is first pasteurized in 71-73°C for 15 seconds or in 65°C for 25 minutes. Secondly, depending on the end-product milk can be packed or be further processed (skimming), or frozen for the production of ice cream. For production of yogurt, milk is either pasteurized or boiled to 82-85°C, and following, after cooling to 42-45°C, it is fermented for 2-3 hours with yogurt yeast or a small yogurt quantity.

For the production of single-breed cheese products, milk originating exclusively from a single breed of milk-producing animal is first pasteurized in 71-73°C for 15 seconds or in 65°C for 25 minutes and then is coagulated with specific amount of rennet in certain temperature, depending on cheese type and cheese quality. In order to sustain coagulation, before the addition of rennet, milk is cooled and then a special lactic acid culture of microorganisms is added to the mixture (1-2% v/v, depending on cheese type). This maturation step usually lasts for 10 minutes, while optionally 8-10 grams of calcium chloride diluted in water or 20 ml of calcium chloride (40% v/v), are added to 100 kg or liters of milk. Further, for soft cheese production milk is coagulated at 28-30°C for 60 minutes, and regarding semi-hard cheese, milk is coagulated with rennet at 32-35°C for 30-50 minutes. Milk originating exclusively from a single animal breed can be used in cheese production without any prior pasteurization process, as long as milk has been tested to be of highest quality and pathogen-free. Furthermore, coagulation of milk originating exclusively from a single animal breed can be performed by using rennet from same animal breed as the one milk originates from. In this specific case lactic acid culture can be avoided.

Further, depending on cheese type end-product, custard-like mass undergoes relevant treatment. In the case of soft cheese production following coagulation, the curd is cut into small pieces in order to separate the liquid (whey), then put to molds (different shapes and sizes) and drained for relevant time periods, in order to achieve the desired final texture and humidity of the product.

Thus, in the case of white cheese production, the curd is cut in cubes 15-20 mm in size and is being softly stirred. Then it is left to rest (approximately for 10 minutes) and put in molds with small holes in order to drain. Following sufficient drainage and cheese is solidified, the mold is taken off and cheese is cut in pieces that are out to a special surface and salted at different time intervals, for 6-12 hours. Cheese pieces are salted on both sides and each side is salted twice. Cheese is left on the specific table for few more days in order for fermentation to begin. Optionally, following salting procedure cheese can be stored in containers in 16-18°C, and containers cannot be sealed until after 15-20 days. When fermentation commences, containers are filled with brine 8-10%. Following completion of fermentation containers are sealed and stored at 4°C.

For production of hard cheese, the curd is cut and pieces are stirred while being re-heated at 42-50°C for 35-40 minutes. After removal of whey, the curd is cut to pieces depending on cheese type (heads, sticks etc.) and put into specific molds under pressure. Pressure is gradually increased for 8-24 hours, while molds are constantly moved in order for curd to be void of liquids. Next, when curd is taken off pressure, it is placed in maturation chamber at 16-18°C under 85-90% humidity and salted for predefined time periods, depending on cheese type. Alternatively, the curd can be salted in brine 20-22% at 10-12°C for 3-4 days. Cheese, then, is left to undergo maturation and at the end of this step, cheese is covered with a paraffin layer and kept in freezing conditions.

By implementing the above procedures, single-breed cheese, or single-breed white cheese has been produced, by using milk, exclusively from phylogenetically and/or genetically and/or molecularly defined sheep and/or goats of the following breeds: (i) Boutsko breed (mountain breed of Epirus), (ii) Frizarta breed (Arta) and (iii) Capra prisca goat breed (indigenous greek goat breed).

Furthermore, by implementing the above procedures, single-breed hard cheese has been produced, by using milk, exclusively from phylogenetically and/or genetically and/or molecularly defined sheep and/or goats of the following breeds: (i) Boutsko breed (mountain breed of Epirus), (ii) Frizarta breed (Arta) and (iii) Capra prisca goat breed (indigenous greek goat breed).

In order to investigate the characteristics of each type of single-breed cheese, cheese samples were analyzed by means of proteomics. In greater detail, a small cheese sample from each cheese type is rehydrated for 8-24 hours in urea/thiourea buffer and then sample is homogenized both mechanically and by ultrasound dissociation. The mixture is then centrifuged and following centrifugation the protein content is quantitatively measured in the supernatant. Next, 5 mg of total protein from the supernatant are reduced and alkylated via specific buffers and are subjected to digestion by trypsin for 6-8 hours. Finally, proteins are identified by specific software, analyzing the peptides produced in the previous step of tryptic digestion. Through analysis of the results, as can be seen in Table I, 46 proteins are exclusively present in goat cheese of Capra prisca breed, 52 proteins are exclusively present in cheese from sheep of the Boutsko breed and 37 proteins are exclusively present in cheese from sheep of the Frizarta breed.

**The above results safely lead to the conclusion that dairy and cheese products originating from milk of exclusively one breed of phylogenetically and/or genetically and/or molecularly defined milk-producing animals (sheep or goats), present and designate special milk characteristics that are tightly correlated to each specific breed of animal.**

**TABLE 1**

| Carpa prisca | | Boutsko (Epirus mountain breed) | | Frizarta (Arta breed) | |
|---|---|---|---|---|---|
| Protein Symbol | Protein Name | Protein Symbol | Protein Name | Protein Symbol | Protein Name |
| MUC15 | Mucin-15 | CATB | Cathepsin B | CNNM4 | Metal transporter CNNM4 |
| NUCB1 | Nucleobindin-1 | CTHL1 | Cathelicidin-1 | PININ | Pinin |
| URP2 | Fermitin family homolog 3 | CERU | Ceruloplasmin | SNX29 | Sorting nexin-29 |
| HSP7C | Heat shock cognate 71 kDa protein | LMNA | Prelamin-A/C | TGFB2 | Transforming growth factor beta-2 |
| MYBPP | MYCBP-associated protein | IRS1 | Insulin receptor substrate 1 | SEMG2 | Semenogelin-2 |
| OSTN | Osteocrin | CCPG1 | Cell cycle progression protein 1 | SCTR | Secretin receptor |
| NSF1C | NSFL1 cofactor p47 | CADH1 | Cadherin-1 | ST18 | Suppression of tumorigenicity 18 protein |
| ADAM2 | Disintegrin and metalloproteinase domain-containing protein 2 | CALR | Calreticulin | NUAK1 | NUAK family SNF1-like kinase 1 |
| AGRIN | Agrin | SPA34 | Serpin A3-4 | PRAX | Periaxin |
| DLGP5 | Disks large-associated protein 5 | IFM2 | Interferon-induced transmembrane protein 2 | TLR2 | Toll-like receptor 2 |
| STXB3 | Syntaxin-binding protein 3 | FGFP1 | Fibroblast growth factor-binding protein 1 | TKN4 | Tachykinin-4 |
| ANGT | Angiotensinogen | SCG1 | Secretogranin-1 | CD36 | Platelet glycoprotein 4 |
| MMP23 | Matrix metalloproteinase-23 | TYB10 | Thymosin beta-10 | RET4 | Retinol-binding protein 4 |
| KI13A | Kinesin-like protein KIF13A | UBP25 | Ubiquitin carboxyl-terminal hydrolase 25 | FABP6 | Gastrotropin |
| PIBF1 | Progesterone-induced-blocking factor 1 | MGP | Matrix Gla protein | AP2D | Transcription factor AP-2-delta |
| PLXA1 | Plexin-A1 | PDC6I | Programmed cell death 6-interacting protein | CLH2 | Clathrin heavy chain 2 |
| FAS | Fatty acid synthase | TRIP4 | Activating signal cointegrator 1 | CTND1 | Catenin delta-1 |
| FAT2 | Protocadherin Fat 2 | TXD12 | Thioredoxin domain-containing protein 12 | EFNB1 | Ephrin-B1 |
| ANR26 | Ankyrin repeat domain-containing protein 26 | CAN10 | Calpain-10 | GKN1 | Gastrokine-1 |
| AQP6 | Aquaporin-6 | DEFB1 | Beta-defensin 1 | IFRD1 | Interferon-related developmental regulator 1 |
| DYH10 | Dynein heavy chain 10, axonemal | DYH6 | Dynein heavy chain 6, axonemal | SYNE1 | Nesprin-1 |
| EDF1 | Endothelial differentiation-related factor 1 | DYH7 | Dynein heavy chain 7, axonemal | TEN3 | Teneurin-3 |
| FBF | Fas-binding factor 1 | DYH9 | Dynein heavy chain 9, axonemal | EPN2 | Epsin-2 |
| FSIP2 | Fibrous sheath-interacting protein 2 | LMOD2 | Leiomodin-2 | FGFR4 | Fibroblast growth factor receptor 4 |
| MOES | Moesin | M3K15 | Mitogen-activated protein kinase kinase kinase 15 | LRP2 | Low-density lipoprotein receptor-related protein 2 |
| NBEL2 | Neurobeachin-like protein 2 | O10J4 | Olfactory receptor 10J4 | NEST | Nestin |
| OR4KD | Olfactory receptor 4K13 | O5112 | Olfactory receptor 5112 | PTHR | Parathyroid hormone-related protein (Fragment) |
| OSBP2 | Oxysterol-binding protein 2 | 052L1 | Olfactory receptor 52L1 | CETN2 | Centrin-2 |
| PALD | Paladin | RDH11 | Retinol dehydrogenase 11 | CLHC1 | Clathrin heavy chain linker domain-containing protein 1 |
| ZN674 | Zinc finger protein 674 | SAP | Prosaposin | CRFR2 | Corticotropin-releasing factor receptor 2 |
| ZN880 | Zinc finger protein 880 | SYPL1 | Synaptophysin-like protein 1 | FGRL1 | Fibroblast growth factor receptor-like 1 |
| GUC2D | Olfactory guanylyl cyclase GC-D | TEKT5 | Tektin-5 | HYCCI | Hyccin |
| ICA1L | Islet cell autoantigen 1-like protein | TITIN | Titin | ITSN2 | Intersectin-2 |
| NF1 | Neurofibromin | CADH6 | Cadherin-6 | NPYSR | Neuropeptide Y receptor type 5 |
| PLST | Plastin-3 | DOK1 | Docking protein 1 | SPG20 | Spartin |
| AL1A1 | Retinal dehydrogenase 1 | FNBP1 | Formin-binding protein 1 | TR134 | Taste receptor type 2 member 134 |
| APOE | Apolipoprotein E | SPRL1 | SPARC-like protein 1 | | |
| ARBK2 | Beta-adrenergic receptor kinase 2 | CATD | Cathepsin D (Fragment) | | |
| CASPC | Caspase-12 | CP2R1 | Vitamin D 25-hydroxylase | | |
| GANAB | Neutral alpha-glucosidase AB | EZRI | Ezrin | | |
| HSP7E | Heat shock 70 kDa protein 14 | GELS | Gelsolin | | |
| KLH41 | Kelch-like protein 41 | IFNA4 | Interferon alpha-4 | | |
| MRP7 | Multidrug resistance-associated protein 7 | IL1B | Interleukin-1 beta | | |
| SAA2 | Serum amyloid A-2 protein | JPH3 | Junctophilin-3 | | |
| T2EB | General transcription factor IIE subunit 2 | MNS1 | Meiosis-specific nuclear structural protein 1 | | |
| UBR4 | E3 ubiquitin-protein ligase UBR4 | MUC1 | Mucin-1 | | |
| | | [NUP37 | Nucleoporin Nup37 | | |
| | | PLEC | Plectin (Fragment) | | |
| | | PPR18 | Phostensin | | |
| | | SDF2 | Stromal cell-derived factor 2 | | |
| | | TRFM | Melanotransferrin | | |
| | | VTNC | Vitronectin | | |

### E. ADVANTAGES OF THE CURRENT INVENTION

Currently dairy and cheese products are produced mainly by use of cow, sheep or goat milk. Depending on the end-product, cow, sheep or goat milk are used alone or in mixture, under certain ratios. However, while for most products, the animal species that milk originates from is described, never does milk description includes the animal breed. Currently, due to progress and advancement in scientific technologies, it has been found that milk originating form certain breeds of milk-producing animals that have been phylogenetically and/or genetically and/or molecularly investigated, has definite properties that are in tight junction with the characteristics of its breed of origin. Therefore, milk from each animal breed has contents (proteins, metabolites, lipids etc.) differing in their concentration from breed to breed. Certain proteins, lipids, and metabolites may be present in one breed of animals, while absent from another, or existing under different quantities in each breed. These specific biological factors give SBP special features (in tight correlation with the animal breed), that are responsible for SBP bioactive properties, and therefore for health benefits (anti-hypertensive, lipid regulation, anti-athyatheromatic and anticancer) for the human organism. It can, thus, be said that by the dairy product and cheese production procedure followed so far, the special features of milk of each animal breed are left suppressed in the final product and therefore are unexploited.

The present invention refers to the production of a series of dairy and cheese products based on processing milk that originates exclusively from a phylogenetically and/or genetically and/or molecularly defined animal breed, thus unraveling the superior milk features that would otherwise be suppressed.

Given the vast geographical dispersion of rural rearing for animal breeds (e.g. Chios breed animals are reared in Western Macedonia, Boutsko breed animals are reared in Epirus and Thessaly, Skopelos breed animals are reared in Magnesia and Sporades), the production of SBP is independent of the rearing region as well as the geographic origin of milk from each breed.

The present invention describes a novel category of dairy and cheese products [termed: single-breed products (SBP), or designated breed of origin (DBO) products], designed to include a single type of milk originating from one phylogenetically and/or genetically and/or molecularly defined animal breed. Therefore, the special milk features of each animal breed separately, that are now blocked due to current dairy and cheese product engineering (milk mixing), are being revealed.

### Z. DETAILED DESCRIPTION OF AN APPLICATION

### a) Production of single-breed feta cheese from sheep milk of Boutsiko or Boutsko breed (mountain breed of Epirus).

Milk is first tested and verified, by application of mass spectrometry, to confirm its breed of origin (Boutsko) and its specific characteristics.

The single-breed mass spectrometry-verified milk is then pasteurized in 71-73°C for 15 seconds, or in 65°C for 25 minutes. Next milk is refrigerated and a lactic acid culture is added (1-2% v/v, depending on cheese type). This maturation step lasts for 10 minutes, while optionally 8-12 grams of calcium chloride diluted in water or 20 ml of calcium chloride (40% v/v), are added to 100 kg or liters of milk.

Next, for the production of feta, white and soft cheese, milk is coagulated with certain amount of rennet in 28-30°C for 55 minutes. Besides using commercially available rennet, milk coagulation can be performed with rennet from the same animal breed as the one milk originates from.

Following, the curd is cut in 15-20 mm size cubes and is softly stirred. Then is left to rest (approximately for 10 minutes) and put in molds with holes in order to drain, for 5-6 hours depending on the season. When cheese is drained enough turned solid, the mold is taken off, and cheese is cut into pieces.

Cheese pieces are placed on a special table and are periodically salted by thick salt for 6-12 hours. Cheese pieces are salted in such manner that each side is salted at least two times.

Cheese is left on the special table for few more days in order for fermentation to begin, while daily turned on each side. Optionally following salting procedure cheese can be stored in containers in 16-18°C, and these can be sealed after 15-20 days at 16-18°C. When fermentation commences, containers are filled with brine 8-10%. Following completion of fermentation containers are sealed and stored at 4°C.

### b) Production of single-breed hard cheese from sheep milk of Boutsiko or Boutsko breed (mountain breed of Epirus).

Milk is first tested and verified, by application of mass spectrometry, to confirm its breed of origin (Boutsko) and its specific characteristics.

The single-breed mass spectrometry-verified milk is then pasteurized in 71-73°C for 15 seconds, or in 65°C for 25 minutes. Next milk is refrigerated and a lactic acid culture is added (1-2% v/v, depending on cheese type). This maturation step lasts for 10 minutes, while optionally 8-12 grams of calcium chloride diluted in water or 20 ml of calcium chloride (40% v/v), are added to 100 kg or liters of milk.

Next, milk is coagulated with certain amount of rennet in 32-38°C for 30-50 minutes. Besides using commercially available rennet, milk coagulation can be performed with rennet from the same animal breed (Mputsko breed) as the one milk originates from.

The curd is cut into pieces and pieces are constantly stirred while being reheated at 42-50°C for 35-40 minutes. Then, after removal of whey, the curd is cut to pieces depending on cheese type (heads, sticks etc.) and into specific molds, under pressure. Pressure is gradually increased for 8-24 hours, while molds are constantly moved in order for curd to be void of liquids. Next, when curd is taken off pressure, it is placed in a maturation chamber at 16-18°C under 85-90% humidity and is being salted for predefined time periods, depending on end-product cheese type. Alternatively, the curd can be salted in brine 20-22% at 10-12°C for 3-4 days. Cheese, then, is left to undergo maturation and at the end of this step, cheese is covered with paraffin or other protective layer and is kept under freezing conditions..

## Claims

1. A dairy product **characterized by** the fact that milk used for its production is exclusively from a single, phylogenetically and/or genetically and/or molecularly defined breed of milk-producing animal.

2. A cheese product **characterized by** the fact that milk used for its production is exclusively from a single, phylogenetically and/or genetically and/or molecularly defined breed of milk-producing animal.

3. A product, which according to claims 1 and/or 2, is **characterized by** the fact that milk used for its production is exclusively from a single sheep breed, e.g. milk from the Chios sheep breed, or the mountain Epirus breed (Boutsko or Boutsiko), or the Karagkouniko breed, or the Frizarta breed (Arta), or the Kalarytiko breed, or the Agrinio breed, or the Argos breed, or the Thrace breed, or the Karistos breed, or the Lesvos breed, or the Pilio breed, or the Serres breed, or the Sarakatsaniko breed, or the Sfakia breed, or the Florina breed etc. or from genetic amelioration (crossbreeding, genetic selection etc.) of the above breeds.

4. A product, which according to claims 1 and/or 2, is **characterized by** the fact that milk used for its production is exclusively from a single goat breed e.g. goat milk from the Capra prisca breed etc., or from genetic amelioration (crossbreeding, genetic selection *etc.)* of the above breeds.

5. A dairy product, which according to claims 1, 3 and/or 4, is bottled milk or pasteurized milk, or skim milk, or enriched milk, or milk treated by any other method (such as microfiltration, high pasteurization etc.) or sour milk, or milk butter, or colostrum etc.

6. A dairy product, which according to the claims 1, 3 and/or 4, is a result of milk fermentation (zymosis).

7. A dairy product, which according to claim 6, is yogurt, or yogurt-type, or dessert-type yogurt of any kind (dessert by addition of sweeteners and/or colors and/or fruits and/or fruit products or with low lipids and/or enriched yogurt *etc.)* or ice cream.

8. A dairy product, which according to claims 1, 3 and/or 4 is of ice-cream type.

9. A dairy product, which according to claims 7 and 8 is of yogurt-type ice cream.

10. A cheese product, which according to claims 2, 3 and/or 4, is produced by fermentation of milk with rennet.

11. A product, which according to claim 10 is of cheese type (fresh cheese, soft cheese, cream cheese, mizithra cheese, anthotiro cheese, white cheese, hard cheese, semi-hard cheese *etc.).*

12. A product which, according to claim 10, is produced by further fermentation and/or maturation (and/or any other additional processing steps) and/or thermal treatment and/or placed in molds and/or undergoes maturation.

13. A product which, according to claim 10, is **characterized by** the fact that rennet, used for fermentation, originates from the same animal breed as the milk used as first material.

14. A dairy or cheese product **characterized by** the fact that its production is performed by processing and/or mixture of two or more milk types originating from phylogenetically and/or genetically and/or molecularly defined milk-producing animals.
